# EUROPÄISCHE PATENTSCHRIFT

(11) **EP 1 833 341 B1**
(45) Veröffentlichungstag und Bekanntmachung des Hinweises auf die Patenterteilung: **19.03.2008**
(21) Anmeldenummer: 05821344.8
(22) Anmeldetag: 30.12.2005
(51) Int. Cl.: A47J 39/02, A47J 36/02

(54) **BEHÄLTER, INSBESONDERE GASTRONORM (GN) -BEHÄLTER**
CONTAINER, PARTICULARLY A GASTRONORM (GN) CONTAINER
CONTENANT, EN PARTICULIER CONTENANT GASTONORME (GN)

(30) Priorität: 31.12.2004 DE 102004063653
(43) Veröffentlichungstag der Anmeldung: 19.09.2007
(73) Patentinhaber: Eisfink Max Maier GmbH & Co. KG, 71636 LUDWIGSBURG (DE)
(72) Erfinder: MAIER, Max, 71636 Ludwigsburg (DE)
(74) Vertreter: Menges, Rolf
(86) Internationale Anmeldenummer: PCT/EP2005/014151
(87) Internationale Veröffentlichungsnummer: WO 2006/072459

(56) Entgegenhaltungen:
- EP-A- 0 467 000
- US-A- 4 646 935
- US-A- 5 952 112

## Beschreibung

Die Erfindung betrifft einen Behälter der im Oberbegriff des Patentanspruchs 1 angegebenen Art. Ein solcher Behälter ist in dem Dokument US-A-5952112 offenbart.

Behälter, die im Küchen- oder Gastronomiebereich zur Aufnahme von Speisen, sei es zur Warmhaltung, sei es zur Zubereitung, eingesetzt werden, bestehen üblicherweise aus nichtrostendem Stahl. Das gilt insbesondere auch für GN-Behälter, die hauptsächlich zum Warmhalten, Kühlhalten oder allgemein zum Aufbewahren von Speisen eingesetzt werden, insbesondere in Warm- bzw. Kaltausgaben. Einzelheiten zu solchen GN-Behältern und Warmausgaben finden sich beispielsweise in dem Dokument EP 0 635 225 B1. Dieses Dokument bezieht sich auf eine Warmspeisenausgabe, bei welcher die GN-Behälter zum Warmhalten, aber auch zum Zubereiten von Speisen eingesetzt werden. Die Wärmebeaufschlagung des GN-Behälters erfolgt in beiden Fällen durch von einer elektrischen Heizplatte ausgehende Wärmestrahlung, da GN-Gehälter aus nichtrostendem Stahl üblicherweise nicht induktionsfähig, das heißt nicht durch eine Induktionsheizvorrichtung beheizbar sind.

Es ist bekannt, Kochgeschirr oder -gerät aus einem Behälter aus nichtrostendem Stahl herzustellen, diesen aber, um ihn induktionsfähig zu machen, mit einer dicken Bodenscheibe aus Aluminium oder dgl. gut wärmeleitfähigem Material zu versehen. Solches Kochgeschirr oder -gerät ist zum Beispiel aus den Dokumenten DE 36 34 841 A1, DE 36 39 013 A1 und DE 44 12 943 C2 bekannt. Nach diesem Prinzip ließe sich auch ein GN-Behälter induktionsfähig machen, jedoch würde das seinen Herstellungsprozess wesentlich verteuern. Ein GN-Behälter wird üblicherweise einfach durch Tiefziehen aus einem Blech aus nichtrostendem Stahl hergestellt. Auch das vorerwähnte Kochgeschirr oder -gerät ist in der Herstellung teuer. Außerdem ist solches Geschirr oder Gerät nicht mit ausreichender Effizienz bei der Warmhaltung von Speisen wie zum Beispiel in einer Warmspeisenausgabe einsetzbar, weil es aufgrund seines Aufbaus für die Speisenzubereitung ausgelegt ist und sein Einsatz als Behälter zum Warmhalten bei der Speisenausgabe nur einen Kompromiss darstellen kann.

Das o.g. Dokument US-A-5952112 offenbart ein Kochgeschirr für die Speisenzubereitung.

Aufgabe der Erfindung ist es, einen Behälter nach dem Oberbegriff des Patentanspruchs 1 so auszubilden, dass er mit großer Effizienz im Prozess der Speisenvorbereitung, Speisenzubereitung und der Speisenausgabe einsetzbar ist.

Diese Aufgabe wird durch einen Behälter mit den im kennzeichnenden Teil des Patentanspruchs 1 angegebenen Merkmalen gelöst.

Der Behälter nach der Erfindung kann nicht nur zur Speisenvorbereitung eingesetzt werden, sondern im Prozess der Speisenvorbereitung, der Speisenzubereitung und der Speisenausgabe, wodurch die Einsatzmöglichkeiten des Behälters erweitert werden. Da der erfindungsgemäße Behälter ein GN-Behälter ist, der üblicherweise eigentlich zum Warmhalten von Speisen bestimmt ist und mit Strahlungswärme beheizt wird, kann er in der erfindungsgemäßen Ausbildung als Kochgeschirr zur Speisenvorbereitung oder Speisenzubereitung eingesetzt werden, denn mit diesem GN-Behälter, der wahlweise induktiv oder mit Strahlungswärme beheizbar ist kann mit gleicher Effizienz eine Speise vorbereitet und zubereitet werden. Die Herstellung des erfindungsgemäßen Behälters ist sehr einfach, weil er nur aus einem Material, nämlich einem Mehrschichtmaterial besteht, das lediglich in die entsprechende Form gebracht zu werden braucht, wofür üblicherweise ein Arbeitsgang ausreichend ist.

Vorteilhafte Ausgestaltungen des Behälters nach der Erfindung bilden die Gegenstände der Unteransprüche.

Wenn in einer Ausgestaltung des Behälters nach der Erfindung dieser durch Tiefziehen aus einer aus dem Mehrschichtmaterial bestehenden Platte hergestellt wird, ist seine Herstellung ebenso einfach und kostensparend wie die eines bekannten GN-Behälters aus nichtrostendem Stahl.

Wenn in einer weiteren Ausgestaltung des Behälters nach der Erfindung beide Deckschichten aus ferritischem Stahl bestehen, können hinsichtlich der Verformung aufgrund unterschiedlicher Wärmeausdehnungszahlen keine Probleme auftreten. Solche Probleme kann es in dem oben geschilderten Stand der Technik geben, wenn Schichten austenitischem Stahl und ferritischem Stahl miteinander kombiniert werden.

Allerdings ist auch in einer Ausgestaltung des Behälters nach der Erfindung, bei der die andere Deckschicht aus austenitischem Stahl besteht, das Problem hinsichtlich der Verformung aufgrund unterschiedlicher Wärmeausdehnungszahlen lösbar, wenn die Deckschichten entsprechend dünn gemacht werden.

Wenn in einer weiteren Ausgestaltung des Behälters nach der Erfindung das Mehrschichtmaterial eine Gesamtdicke von bis zu 4 mm aufweist und die Deckschichten jeweils eine Dicke von bis zu 0,6 mm aufweisen, ist das vorgenannte Problem beseitigt.

Wenn in einer weiteren Ausgestaltung des Behälters nach der Erfindung der ferritische Stahl aus bis zu 0,025 Gewichts-% C, 17 - 20 Gewichts-% Cr, 1,80 - 2,50 Gewichts-% Mo, 4 x % (C + N) + 0,15 - 0,80 Gewichts-% Ti und bis zu 0,030 Gewichts-% N besteht, dann lässt sich bei der Erfindung für die Deckschichten des Mehrschichtmaterials ein handelsüblicher, nichtrostender Stahl des Typs NIROSTA® 4521 einsetzen. Dabei handelt es sich um einen nichtrostenden Stahl, der gut magnetisierbar ist, sich gut kaltumformen lässt (zum Beispiel durch Biegen, Bördeln oder Tiefziehen) und aufgrund seines Molybdängehalts eine verbesserte Lochkorrosionsbeständigkeit gegenüber 17 % Chromstählen ohne Molybdänzusatz aufweist, wie sie im Stand der Technik bei Kochgeräten bislang eingesetzt werden.

Ausführungsbeispiele der Erfindung werden im Folgenden unter Bezugnahme auf die beigefügte Zeichnung näher beschrieben. Es zeigt:
- Fig. 1: in einer perspektivischen Ansicht einen Behälter nach der Erfindung, welcher in diesem Fall ein GN-Behälter ist, und
- Fig. 2: eine Querschnittansicht der Wand des Behälters nach Fig. 1 an einer beliebigen Stelle desselben.

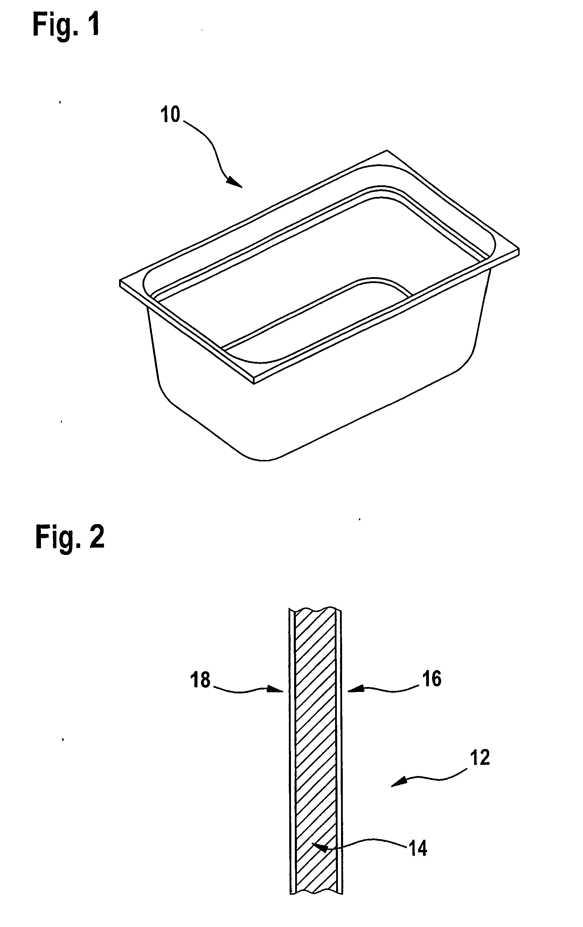

Fig. 1 zeigt einen insgesamt mit 10 bezeichneten Behälter nach der Erfindung, bei welchem es sich in dem dargestellten Ausführungsbeispiel um einen GN-Behälter nach DIN 66075 handelt, der zur Aufnahme von Speisen bestimmt ist und dessen Wand aus einem metallischen Werkstoff hergestellt ist. Gemäß der Darstellung in Fig. 2 ist der metallische Werkstoff ein Mehrschichtmaterial aus drei aufeinander befestigten Schichten. Das Mehrschichtmaterial ist eine Mehrschichtplatte 12, die eine dicke Zwischensicht 14 aus gut wärmeleitfähigem Material, hier Aluminium, zwischen zwei wesentlich dünneren Deckschichten aus nichtrostendem Stahl, nämlich einer Deckschicht 16 und einer Deckschicht 18, aufweist. Wenigstens eine der beiden Deckschichten 16, 18 besteht aus ferritischem Stahl, also aus einem Werkstoff, der gut magnetisierbar ist. Die andere Schicht kann aus austenitischem Stahl bestehen, also aus einem Werkstoff, der nur gering magnetisierbar ist. Vorzugsweise bestehen aber beide Deckschichten 16, 18 aus ferritischem Stahl.

Der bei der Erfindung eingesetzte austenitische Stahl kann ein 13 - 17 % Chromstahl sein.

Der bei der Erfindung eingesetzte ferritische Stahl besteht vorzugsweise aus bis zu 0,025 Gewichts-% C, 17 - 20 Gewichts-% Cr, 1,80 - 2,50 Gewichts-% Mo, 4 x % (C + N) + 0,15 - 0,80 Gewichts-% Ti und bis zu 0,030 Gewichts-% N. Es handelt sich also um den Werkstoff Nr. 14521 nach EN 10088-2 mit dem deutschen Kurznamen (DIN/EN) X2 CrMoTi 18-2 oder mit dem US-Kurznamen (ASTM) 444. Die Magnetisierbarkeit und die übrigen Daten dieses Stahls sind dem Werkstoffblatt NIROSTA® 4521 zu entnehmen.

Das Mehrschichtmaterial hat eine Gesamtdicke von bis zu 4 mm und die Deckschichten haben jeweils eine Dicke von bis zu 0,6 mm.

Die Mehrschichtplatte 12 spricht thermisch schnell an, ist einfach zu pflegen und wird sich aufgrund ihres Aufbaus im Betrieb nicht verziehen.

Der in Fig. 1 gezeigte Gastronormbehälter 10, der in seiner Gesamtheit aus dem Mehrschichtmaterial besteht, hat an jeder Stelle den aus Fig. 2 ersichtlichen Wandaufbau. Der Gastronormbehälter 10 ist einstückig aus dem Mehrschichtmaterial hergestellt, vorzugsweise durch Tiefziehen.

Der GN-Behälter 10 nach der Erfindung ist aufgrund seines Aufbaus als effizientes Kochgeschirr einsetzbar, da er wahlweise induktiv oder durch Strahlungswärme beheizbar ist, ebenso effizient aber zur Warmhaltung von Speisen einsetzbar wie z. B. in einer Warmausgabe, wie sie aus dem eingangs erwähnten Dokument EP 0 635 225 B1 bekannt ist.

## Patentansprüche

1. Behälter (10) zur Aufnahme von Speisen, hergestellt aus einem metallischen Werkstoff, der ein Mehrschichtmaterial aus mehreren aufeinander befestigten Schichten ist, wobei der Behälter (10) in seiner Gesamtheit aus dem Mehrschichtmaterial besteht, wobei das Mehrschichtmaterial eine dicke Zwischenschicht (14) aus gut wärmeleitfähigem Material wie Aluminium, Kupfer oder Stahl zwischen zwei wesentlich dünneren Deckschichten (16, 18) aus nichtrostendem Stahl aufweist und wobei wenigstens eine der Deckschichten (16, 18) aus ferritischem Stahl besteht, **dadurch gekennzeichnet, dass** der Behälter (10) ein als Kochgeschirr ausgebildeter Gastronorm (GN)-Behälter ist.

2. Behälter nach Anspruch 1, hergestellt durch Tiefziehen aus einer aus dem Mehrschichtmaterial bestehenden Platte.

3. Behälter nach Anspruch 1 oder 2, **dadurch gekennzeichnet, dass** beide Deckschichten (16, 18) aus ferritischem Stahl bestehen.

4. Behälter nach Anspruch 1 oder 2, **dadurch gekennzeichnet, dass** die andere Deckschicht aus austenitischem Stahl besteht.

5. Behälter nach einem der Ansprüche 1 bis 4, **dadurch gekennzeichnet, dass** das Mehrschichtmaterial eine Gesamtdicke von bis zu 4 mm aufweist und dass die Deckschichten (16, 18) jeweils eine Dicke von bis 0,6 mm aufweisen.

6. Behälter nach einem der Ansprüche 1 bis 5, **dadurch gekennzeichnet, dass** der ferritische Stahl aus bis zu 0,025 Gewichts-% C, 17 - 20 Gewichts-% Cr, 1,80 - 2,50 Gewichts-% Mo, 4 x % (C + N) + 0,15 - 0,80 Gewichts-% Ti und bis zu 0,030 Gewichts-% N besteht.

## Claims

1. A container (10) for holding food, fabricated from a metallic material which is a multilayer material comprised of several layers fastened one upon the other, said container (10) being made of the multilayer material in its entirety, said multilayer material having a thick intermediate layer (14) of a material conducting heat well, such as aluminum, copper or steel, between two substantially thinner cover layers (16, 18) of stainless steel, with at least one of said cover layers (16, 18) being made of ferritic steel, **characterized in that** the container (10) is a Gastronorm (GN) container constructed as a cooking utensil.

2. The container according to claim 1, which is produced by deep drawing from a plate made of said multilayer material.

3. The container according to claim 1 or 2, **characterized in that** both cover layers (16, 18) are made of ferritic steel.

4. The container according to claim 1 or 2, **characterized in that** the other cover layer is made of austenitic steel.

5. The container according to anyone of the claims 1 to 4, **characterized in that** the multilayer material has a total thickness of up to 4 mm, and each of the cover layers (16, 18) has a thickness of up to 0,6 mm.

6. The container according to any one of the claims 1 to 5, **characterized in that** the ferritic steel contains up to 0,025 weight percent C, 17 to 20 weight percent Cr, 1,80 to 2,50 weight percent Mo, 4 x % (C + N) + 0,15 to 0,80 weight percent Ti, and up to 0,030 weight percent N.

## Revendications

1. Récipient (10) destiné à recevoir des aliments et fabriqué en un matériau métallique, qui est un matériau multicouche composé de plusieurs couches fixées les unes sur les autres, le récipient (10) étant constitué en totalité par le matériau multicouche, le matériau multicouche présentant une couche intermédiaire épaisse (14) en un matériau à bonne conductibilité thermique, tel que de l'aluminium, du cuivre ou de l'acier, entre deux couches de recouvrement (16, 18) sensiblement plus minces en acier inoxydable, et dans lequel au moins l'une des couches de recouvrement (16, 18) est faite en acier ferritique, **caractérisé en ce que** le récipient (10) est un récipient aux normes pour contact alimentaire (GN), conçu en tant que plat pour la cuisson.

2. Récipient selon la revendication 1, fabriqué par emboutissage profond à partir d'une plaque dudit matériau multicouche.

3. Récipient selon la revendication 1 ou 2, **caractérisé en ce que** les deux couches de recouvrement (16, 18) consistent en de l'acier ferritique.

4. Récipient selon la revendication 1 ou 2, **caractérisé en ce que** l'autre couche de recouvrement consiste en de l'acier austénitique.

5. Récipient selon l'une des revendications 1 à 4, **caractérisé en ce que** le matériau multicouche présente une épaisseur totale pouvant aller jusqu'à 4 mm, et **en ce que** les couches de recouvrement (16, 18) présentent chacune une épaisseur pouvant aller jusqu'à 0,6 mm.

6. Récipient selon l'une des revendications 1 à 5, **caractérisé en ce que** l'acier ferritique se compose de jusqu'à 0,025 % en poids de C, 17 à 20 % en poids de Cr, 1,80 à 2,50 % en poids de Mo, 4 x % (C + N) + 0,15 à 0,80 % en poids de Ti et jusqu'à 0,030 % en poids de N.
